# EUROPEAN PATENT APPLICATION

(11) **EP 3 672 300 A1**
(43) Date of publication of application: **24.06.2020**
(21) Application number: 18382979.5
(22) Date of filing: 21.12.2018
(51) Int. Cl.: H04W 8/20

(54) **PORTABLE SECURE ELEMENTS FOR SUBSCRIPTION MANAGER ROLES**

(71) Applicant: Telefonica, S.A., 28013 Madrid (ES); Giesecke+Devrient Mobile Security GmbH, 81677 München (DE)
(72) Inventor: CARLES LAINA, Joan, 08820 EL PRAT DE LLOBREGAT (Barcelona) (ES); IGNACIO HONORATO, José, 28013 MADRID (ES)
(74) Representative: Herrero & Asociados, S.L.

(57) **Abstract**

Method for managing eSIM profiles in a user's device (110, 230) comprising an embedded UICC, eUICC, the method performed by a portable secure element, SE, server implemented in a portable device (100, 200) local to the user's device (110, 230), the portable SE sever comprising Subscription Manager, SM, functionalities, the method comprises the portable SE server establishing off-line communication with the user's device (100) using local data transport protocols in a secured mode, the portable SE server implementing first SM functionalities (140) for performing secure downloading of the eSIM profiles in the user's device (110) and the portable SE server implementing second SM functionalities (160) for performing end-to-end securing of the eSIM profiles after installation in the eUICC of the user's device (110, 230).

## Description

The present invention generally relates to devices implementing GSMA functionalities for Subscription Manager Roles for eSIM profiles management in Machine-to-Machine (M2M) and consumer uses cases.

### Background of the invention

GSMA, as representative of telecommunication industry, has defined some specifications to allow downloading, installation and management of mobile operator profiles in a secure way. GSMA published a set of specifications for M2M devices (SGP.01 and SGP.02) and other equivalent set for consumer ones (SGP.21 and SGP.22). Same objective, different use case, different technical implementation.

According to GSMA, downloading in eUICC receiver, e.g. a user or consumer's device having an embedded UICC a mobile operator profile or eSIM profile requires a request from the user's device asking for a downloading and a secure connection between the user's device (containing eUICC) and a Subscription Manager (SM) server.

In case of a eUICC receiver using machine to machine (M2M) GSMA specification, since the M2M is unattended, the SM server must push a triggering to the user's device that starts the mobile operator profile downloading request from the user's device to the SM server without any user action said device.

Current known implementations for the Subscription Manager Functionalities are running only on an on-line remote server. An internet connection between the user's device and a network node is always needed. A remote connection between these two elements can be mobile or fixed, e.g. data connectivity 2G-3G-4G, Wi-Fi, etc. and the user's device can use its own connectivity or alternatively can use a connectivity from a primary device acting as an internet proxy. In case of a M2M use case, the device must have its own connectivity. The profile downloading and management processes require an on-line data connection between the user's device (containing the eUICC) and the Subscription Management server.

Hence, there is a need for a technical solution to achieve the GSMA SM Functionalities for eSIM profiles downloading without requiring an on-line connection between the user's device and the SM server as well as security measures are implemented in order to protect the interests of mobile network operators (MNO).

### Description of the invention

The present invention solves at least the aforementioned problems by providing a method for managing GSMA Subscription Manager Functionalities in an UICC embedded in a user's device (i.e. eUICC receiver) with a Portable Secure Element (SE) server (e.g. a portable token) which is local to the eUICC receiver without the requirement of an internet connection between the Portable SE server and the eUICC receiver. The proposed method can be used to download, distribute, enable/disable or manage eSIM profiles or any other type of profile/subscription/keys/package/OS image into the eUICC in an off-line secured mode between the proposed Portable SE server and the eUICC receiver.

The provisioning of the profiles packages (eSIM) can be loaded into the Portable SE server at the SIM's manufacturers during production time. In some situations, the MNO or wireless service provider may remotely download new eSIM profiles from a secure repository server of eSIMs, into the Portable SE at the point of sale (PoS) using desktop connected systems or via over-the-air (OTA) with LTE or Wi-Fi devices.

Additionally, in the same way that the proposed method enables eSIM profile installation/deletion and enabling/disabling, in another example, the proposed method can be used to distribute eUICC OS upgrades in a secured mode.

Hence, the proposed method allows to implement GSMA Subscription Manager roles on a local Portable SE (e.g. a portable token) server (from now on referred as Port-DP+ in the present disclosure) and to perform processes related to eSIM profiles at connected SM-DP+ server (e.g. profile downloading and installation of eSIMs into eUICCs in an off-line local mode). This means that no internet connection is needed, so only local data transport protocols (e.g. peer-to-peer (P2P) protocol) are required. Advantageously, the proposed approach reduces process complexity and devices cost, improving user experience, from an existing on-line connected mechanism to an off-line mechanism according to GSMA SM functionalities.

The Port-DP+ can deliver and manage eSIM profiles in a secure mode according to GSMA specification for use cases (Consumer), via secure P2P communication. Hence, the proposed method and Port-DP+ element enables a decentralized model for Subscription Manager Functionalities. In fact, the Port-DP+ element can be reused (or not), according to business rules that this solution allows configuring, therefore, it can be OTA re-provisioned. According to some examples, the eSIM profiles stored in a Port-DP+ may follow some usage policy rules (out of GSMA specifications). The number of stored eSIM profiles in a Port-DP+ element depends on the size of the secure element and owner needs.

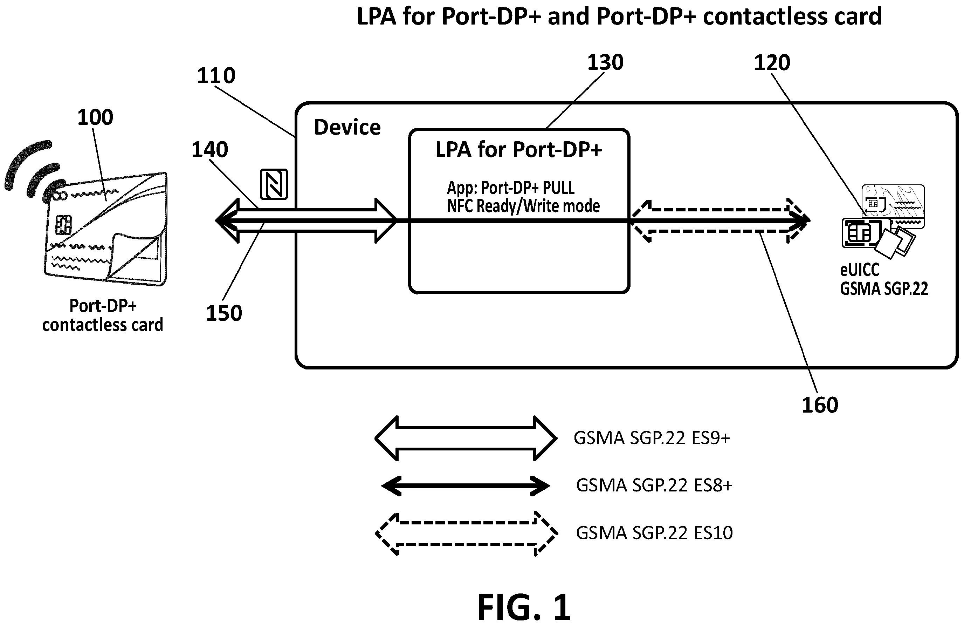

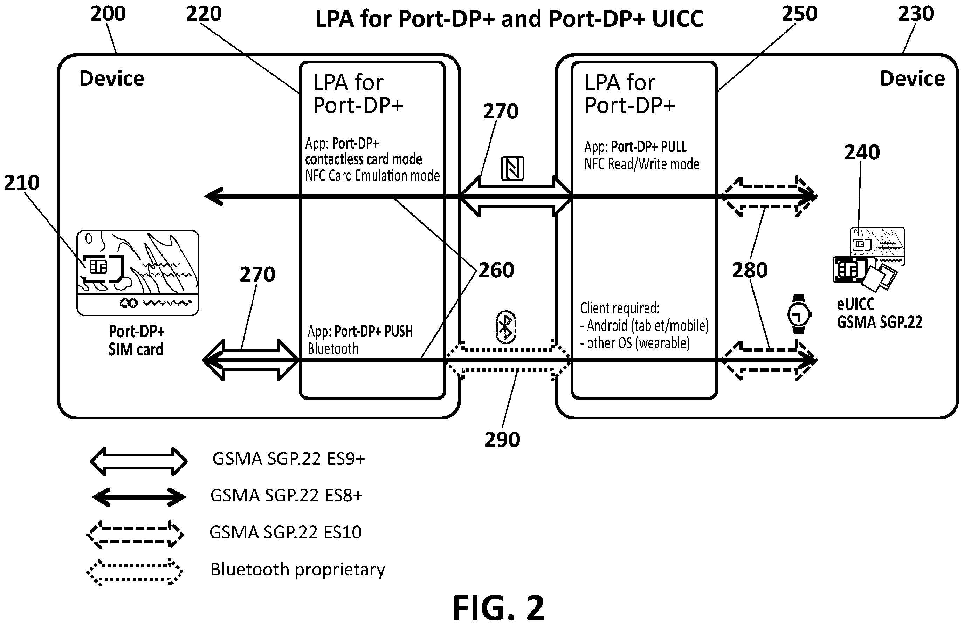

The proposed methods and Port-DP+ serverfulfils GSMA architecture, processes and interfaces. The Port-DP+ SE can be implemented e.g. on contactless smartcards as shown in Figure 1 (smartcards is general term that applies to regular UICC/eUICC products for telecom business but also to other kind of secure element cards such as credit cards or any secure chip/tamper proof chip, portable tokens, etc. that could run secure applications by itself or as part of other consumer's device) and on SIM cards (UICC) as shown in Figure 2 of the present disclosure.

Hence, in a first aspect according to the present disclosure, it is proposed a method for managing eSIM profiles in a user's device in which an UICC is embedded (eUICC), the method is performed by a portable secure element, SE, server or Port-DP+ SE implemented in a portable device local to the user's device, the portable SE sever comprises Subscription Manager, SM, functionalities. The management of eSIM profiles for the eUICC receiver can comprise downloading, installing, distributing, enabling/disabling or eSIM profiles or any other type of profile/subscription/keys/package/patch/OS image.

The set of features required for managing eSIM profiles that can be implemented into the Port-DP+ can comprise interfaces of the Subscription Manager Data Preparation (from now on SM-DP) for profile installation. In particular, the method can comprise a step where the SE server implements first SM functionalities to perform secure downloading of eSIM profiles in the user's device. The first SM functionalities can comprise the ES9+ interface used in GSMA for Profile downloading and Session Management (between SM-DP+ and LPA). Furthermore, the method can comprise another step where the SE server implements second SM functionalities for performing end-to-end securing of the eSIM profiles management after installation of the eSIM profiles in the eUICC of the user's device. The second SM functionalities can comprise the ES8+ interface for Profile and eUICC Management (between SM-DP+ and eUICC) mainly for profile installation at eUICC receiver.

Hence, the ES8+ and ES9+ interfaces can be accommodated inside a Port-DP+ SE allowing to run the existing GSMA use cases (e.g. eSIM profile installation) from the user's eUICC receiver device with an offline Port-DP+.

The set of Port-DP+ features (comprising interfaces ES9+ and ES8+) can be developed on native code or any programming language supported by the selected secure element (such as Javacard in case of smartcards).

Furthermore, the SE server when implementing the first SM functionalities for performing secure downloading of eSIM profiles may download the eSIM profiles in a Local Profile Assistant, LPA for the SE server comprised in the user's device. The LPA can perform third SM functionalities for profile installation and enabling/disabling the eSIM profiles in the eUICC embedded in the user's device. The third SM functionalities can correspond to the ES10 interface of the GSMA standard.

The method also comprises a step where the SE server establishes off-line communication with the user's device using local data transport protocols in a secured mode. Data transport protocols running on a local off-line secure mode between a Port-DP+ (implemented e.g. in smart cards or SIM cards) and the eUICC receiver are proposed in the present invention. The data transport protocols allow using previous interfaces in a local off-line secure mode without requiring a remote connectivity, contrarily to current implementations for downloading eSIM profiles in GSMA.

The previous interfaces may refer to a series of functions defined by GSMA that can be invoked to the Port-DP+ element in an off-line mode with the data transport protocols to perform certain operations that relate to the implementation of the Subscription Manager Functionalities into said Port-DP+. Hence, well known GSMA functions can be reused to achieve the proposed new implementation into the Port-DP+ element in an local off-line connectivity secured mode.

Current GSMA solutions requires on-line remote connectivity to the user's device to access the SM server (either directly when the user's device supports mobile access LTE connectivity, or Wi-Fi connectivity or through a second mobile device supporting LTE or Wi-Fi connection and connected to the user's device via e.g. Bluetooth (BT) with a tethering mode to reach the SM server) to establish connectivity that allows the Subscription Manager Functionality according to GSMA.

In contrast to this, an on-line remote connection between the user's eUICC receiver device and the Port-DP+ is not required. The user's device receiving the eSIM profile can be connected to the Port-DP+ element via local data transport protocol as peer-to-peer (P2P) protocols such as BT, Near Field Communication (NFC), Wi-Fi Direct, etc. Figures 1 and 2 show examples for implementing GSMA Subscription Manager Functionalities in a Port-DP+ SE server using NFC protocol and Bluetooth.

Hence, the portable SE server achieves GSMA Subscription Manager Functionalities. Once the profile is available at the receiver and is activated, it is possible to access the operator mobile network with the user's device. Different configuration policies are proposed to allow small customizations of each Port-DP+ SE server.

In some embodiments, the method comprises a step for implementing a policy that relates to a re-installation of eSIM profiles that have been previously installed and deleted in the same Port-DP+. This policy defines if one profile can be re-installed after an initial installation and consecutive deletion. In case of re-installation of said eSIM profile is allowed, there can be some restrictions about the eUICC destination of the eSIM profile re-installation e.g. only accept the same EID of the eUICC.

In a second aspect according to the present disclosure, it is proposed a portable device implementing a portable secure element, SE, server for managing eSIM in a user's device in which an eUICC is embedded, the portable device is local local to the user's device. The portable SE server comprises means for establishing off-line communication with the user's device using local data transport protocols in a secured mode, means for implementing first SM functionalities for performing secure downloading of eSIM profiles in the user's device and means for implementing second SM functionalities for performing end-to-end securing of the eSIM profiles after installation of the eSIM profiles in the eUICC of the user's device. The first SM functionalities can comprise the ES9+ interface used in GSMA for Profile downloading and Session Management (between SM-DP+ and LPA). The second SM functionalities can comprise the ES8+ interface for Profile and eUICC Management (between SM-DP+ and eUICC) mainly for profile installation at eUICC receiver.

The Port-DP+ comprises means for providing the managed eSIM profiles to the eUICC receiver. Hence, the Port-DP+ achieves GSMA SM functionalities, as GSM consumer Specs. In some examples, the eUICC receiver is embedded within a smartphone, tablet or any wearable supporting eUICC/UICC+SIM, e.g. Trackers, PCs with radio module, smartwatch, etc. Any device with a slot for eUICC insertion or having a welded eUICC.

The portable device can be a (contact/contactless) smart card or a SE UICC card or any secure chip/tamper proof chip or token that runs in secure application by itself or as part of other device. The Port-DP+ secure element further comprises out-of-GSMA functionalities as functions for re-installation policy of eSIM profiles that have been previously installed and deleted in the Port-DP.

In a third aspect, it is proposed a non-transitory digital data storage medium encoding a machine-executable program of instructions to perform the method for implementing Subscription Manager Functionalities according to GSMA in a Port-DP+ for managing eSIM profiles for a user's device comprising an eUICC.

### Brief description of the drawings

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
Figure 1 shows an overview of a diagram for implementing SM functionalities based on NFC wherein an example of a Port-DP+ SE is implemented on a dedicated contactless card.
Figure 2 shows an overview of a diagram for implementing SM functionalities based on NFC/Bluetooth wherein an example of a Port-DP+ SE is implemented on a SIM card (UICC).

### Description of a preferred embodiment

Figure 1 shows a first diagram representing a local off-line secure communication between a Port-DP+ SE on a dedicated contactless card (100) and an embedded UICC (120) in a user's device (110), the user's device (110)comprising a Local Profile Assistant (LPA) (130) for the Port-DP+ based on NFC protocol. The Port-DP+ implements SM functionalities related to e.g. eSIM profile downloading, installation, deletion, etc. with regard to the eUICC receiver (120). In other examples, any secure chip/tamper proof chip or token that runs in secure application by itself or as part of other device could perform as Port-DP+.

The Port-DP+ can be provisioned on the dedicated contactless card (100) during issuance or during the usage phase via local device with online connectivity (not shown in this Figure 1) with the same security level. In the same way, the off-line implementation and communication maintains the same level of security as a conventional GSMA on-line communication. The provisioning of the eSIM profiles can be loaded into the Port-DP+ at the card manufacturing plants of the SIM's manufacturers (like e.g. GyD) during manufacturing of the dedicated contactless card (100). The MNO or wireless service provider may remotely download additional eSIM profiles via on-line mechanism at PoS systems via OTA with LTE, Wi-Fi or any data connectivity protocol.

The dedicated contactless card (100) smartcard acting as a Port-DP+ can store in a secure way the eSIM profiles with subscriptions, can manage the life cycles of the stored eSIM profiles, can validate profile management and its status and can enable interfaces (GSMA SGP.22), new GSMA versions and proprietaries) over local data transport protocols such as BT, NFC, etc.

The eUICC (120) that receives the eSIM profile can be inserted in the user's device (110). The user's device (110) can be e.g. smartphone, tablet or any wearable supporting eUICC/UICC+SIM capabilities (actually, the user-s device (100) can be any device hosting eUICC). In fact, the communication between the eUICC (120) and the Port-DP+ in the dedicated contactless card (100) can be performed, with or without any device "middleware" (native or dedicated app) depending on the eUICC (120) and Port-DP+ capabilities.

Arrow (140) in Fig. 1 represents an off-line communication for performing GSMA SM functionalities described in interface ES9+ of the GSMA SGP.22 e.g. Notification managing and securely downloading of eSIM profiles in the LPA for Port-DP+ (130). The data transport protocol NFC permits to communication between the Port-DP+ implemented in the dedicated contactless card (100) and the LPA for Port-DP+ (130). Once the eSIM profile of the Port-DP+ has been downloaded at the LPA for Port-DP+ (130), it can be installed between the LPA for Port-DP+ (130) and the eUICC (120) using the interface ES10 of the GSMA SPG.22, which is shown in Fig. 1 with arrow (160). ES10 of the GSMA SPG.22 (160) also represents off-line communication for performing GSMA SM functionalities for enabling/disabling the eSIM profile in the eUICC receiver (120) embedded in the device 110.

Furthermore, the eSIM profile is secured end-to-end using interface ES8+, which is shown in Fig. 1 with arrow (150) that also allows to manage the ISD-Ps of the ISD-R.

This eSIM profile can remain as "installed" in the Port-DP+ implemented in the dedicated contactless card (100) or can be deleted. Therefore, this eSIM profile cannot be downloaded again to a second eUICC (not shown in the figure) until the LPA for Port-DP+ (130) disables and deletes this eSIM profile at the eUICC (120) using ES10 of the GSMA SPG.22 (160).

A set of GSMA features can be implemented in order to permit transmission of the eSIM profile into the eUICC receiver 100 as interfaces ES9+ shown in Fig. 1 with arrow (140) and ES8+ shown in Fig. 1 with arrow (150) defined in GSMA SGP.22. The functions of the interface ES10 of the GSMA SPG.22 (160) can be performed between the LPA for Port-DP+ (130) and the eUICC receiver (120) similarly to GSMA specs.

The notifications about the operations processed between the LPA for Port-DP+ (130) and the eUICC (120) are sent to the Port-DP+ implemented in the dedicated contactless card (100) using interface ES9+ of the GSMA SPG.22 shown in Fig. 1 with arrow (140). The secured off-line communication between the Port-DP+ implemented in the dedicated contactless card (100) and the Device (110) is shown in the Figure 1 with the NFC protocol, but it can be used other local protocols.

Figure 2 shows a second diagram representing a local off-line secured communication via NFC protocol between a first Port-DP+ in a UICC (e.g. a SIM card) (210) inserted in a first device 200 comprising a specific LPA for Port-DP+ (220) and a eUICC receiver (240) embedded in a second device (230) comprising a specific LPA for Port-DP+ (250).

The local offline secured communication between the Port-DP+ UICC (210) and the eUICC (240) is done through interfaces ES9+ shown in Fig.2 with arrow (270), interface ES10 shown in Fig.2 with arrow (280) and the end-to-end interface ES8+ shown in Fig.2 with arrow (260). A new interface between both LPA for Port-DP+ must be included for the Bluetooth protocol (290).

Arrow (270) shown in Fig.2 represents an off-line communication for performing GSMA SM functionalities described in interface ES9+ of the GSMA SGP.22 e.g. Notification managing and securely downloading of eSIM profiles in the LPA for Port-DP+ (250). The data transport protocol NFC permits communication between the Port-DP+ UICC (210) and the LPA for Port-DP+ (250). Once the eSIM profile of the Port-DP+ UICC has been downloaded at the LPA for Port-DP+ (250), it is installed using interface ES10 (280) defined in the GSMA SPG.22 between LPA for Port-DP+ (250) and the eUICC (240). The eSIM profile is secured end-to-end using interface ES8+, arrow (260) that also allows to manage the ISD-Ps of the ISD-R.

This eSIM profile can remain as "installed" in the Port-DP+ (210) or can be deleted. Therefore, this eSIM profile cannot be downloaded again to a second eUICC (not shown in the figure) until the LPA for Port-DP+ (250) disables and deletes this eSIM profile at the eUICC 240 using standard ES10 (280).

A set of GSMA features are implemented in order to permit transmission of the eSIM profile into the eUICC receiver (240) as interfaces ES9+ (270), ES8+ (260) defined in GSMA SGP.22. The ES10 (280) functions are performed between the LPA (250) for Port-DP+ (210) and the eUICC receiver (240) similarly to GSMA specs.

Arrow (280) represents off-line communication for performing GSMA SM functionalities for enabling/disabling the eSIM profile in the eUICC receiver (240) embedded in the device (230). The notifications about the operations processed between the LPA (250) and the eUICC (240) are sent to the Port-DP+ (210) using interface ES9+ (270). The secured off-line communication between the Port-DP+ (210) and the Device (230) is shown in the Figure 2 with the NFC protocol, but it can be used other local protocols.

Figure 2 also shows a local off-line secured communication using Bluetooth protocol between a first Port-DP+ on a UICC (210) inserted in a first device (200) and an eUICC (240) inserted/embedded in the device (230), respectively. In this respect, arrows (270), (260), (280) and (290) represent an off-line communication via Bluetooth for installation/deletion and enabling/disabling of an eSIM profile, respectively. In this example, the user's device (230) could be a tablet or smartphone with Android OS or any other wearable.

The term "comprises" and the derivations thereof (such as "comprising", etc.) must not be understood in an exclusive sense, i.e., these terms must not be interpreted as excluding the possibility that what is described and defined may include additional elements, steps, etc.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. Although the present invention has been described with reference to specific embodiments, it should be understood by those skilled in the art that the foregoing and various other changes, omissions and additions in the form and detail thereof may be made therein without departing from the scope of the invention as defined by the following claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method for managing eSIM profiles in a user's device (110, 230) comprising an embedded UICC, eUICC, the method performed by a portable secure element, SE, server implemented in a portable device (100, 200) local to the user's device (110, 230), the portable SE sever comprising Subscription Manager, SM, functionalities, the method comprising:
the portable SE server establishing off-line communication with the user's device (100) using local data transport protocols in a secured mode,
the portable SE server implementing first SM functionalities (140) for performing secure downloading of the eSIM profiles in the user's device (110); and
the portable SE server implementing second SM functionalities (160) for performing end-to-end securing of the eSIM profiles after installation in the eUICC of the user's device (110, 230).

2. The method for managing eSIM profiles according to claim 1, further comprising implementing the first and the second SM functionalities in the SE server using native code or any programming language supported by the portable SE server.

3. The method for managing eSIM profiles according to any of the preceding claims, further comprising the portable SE server downloading eUICC OS upgrades in the user's device (110, 230).

4. The method for managing eSIM profiles according to any of the preceding claims, wherein the portable SE server implementing first functionalities (140) for performing secure downloading of eSIM profiles in the user's device (110) comprises downloading the eSIM profiles into a Local Profile Assistant, LPA, for the portable SE server comprised in the user's device (110, 230), the LPA performing third SM functionalities (160) for performing installation and enabling/disabling of the eSIM profiles in the eUICC in the user's device (110).

5. The method for managing eSIM profiles according to any of the preceding claims further comprising the portable SE server implementing a policy to re-install previously-stored eSIM profiles installed and deleted in the SE server.

6. A portable device (100, 200) implementing a portable secure element, SE, server for managing eSIM profiles in a user's device (110, 230) comprising an embedded UICC, the portable device (100, 200) local to the user's device (110, 230), the portable SE server comprises:
means for establishing off-line communication with the user's device (110, 230) using local data transport protocols in a secured mode;
means for implementing the first SM functionalities (140) for performing secure downloading of the eSIM profiles in the user's device (110);
means for implementing second SM functionalities (160) for performing performing end-to-end securing of the eSIM profiles after installation in the eUICC of the user's device (110).

7. The portable device (100, 200) according to claim 6, wherein the portable device is a (contact/contactless) smart card or a secure memory card or any secure chip/tamper proof chip or token that runs in secure application by itself or as part of other device.

8. The portable device (100, 200) according to claims 6 and 7, wherein the portable SE server further comprises means for configuring a re-installation policy of the eSIM profiles that have been previously installed and deleted in the portable SE server.

9. The portable device (100, 200) according to claims 6 to 8, wherein the means for establishing off-line communication with the user's device (110, 230) comprises means for establishing a Peer two Peer, P2P communication that comprises Bluetooth, or Near Field Communication, NFC protocol, or Wi-Fi Direct.

10. A non-transitory digital data storage medium encoding a machine-executable program of instructions to perform a method according to claims 1 to 5.
